# EUROPEAN PATENT APPLICATION

(11) **EP 2 061 188 A1**
(43) Date of publication of application: **20.05.2009**
(21) Application number: 07764132.2
(22) Date of filing: 28.06.2007
(51) Int. Cl.: H04L 12/437, H04L 12/42, H04L 12/24, H04L 12/26

(54) **A METHOD, APPARATUS AND SYSTEM FOR AVOIDING DATA TO CYCLE IN LOOP IN A RING ETHERNET**

(30) Priority: 07.09.2006 CN 200610153201
(71) Applicant: Huawei Technologies Co., Ltd., Longgang District, Shenzhen Guangdong 518129 (CN)
(72) Inventor: WANG, Yan, Shenzhen, Guangdong 518129 (CN); ZHAI, Suping, Shenzhen, Guangdong 518129 (CN); ZHANG, Pingan, Shenzhen, Guangdong 518129 (CN)
(74) Representative: Gulde Hengelhaupt Ziebig & Schneider
(86) International application number: PCT/CN2007/070203
(87) International publication number: WO 2008/031336

(57) **Abstract**

A method for avoiding loop in an Ethernet ring includes, preventing, by transmit nodes constituting a ring, themselves from using the data frame transmission capabilities of ports on a link affected by a failure, when the ring failure has been detected by a transmit node constituting a ring; obtaining, by a master node of the ring, the ring failure, and performing a protection switching operation; flushing, by transmit nodes, their own forwarding tables, and forwarding a frame according to the flushed forwarding tables. If the failure in the ring has been removed, the master node shifts to a normal state and transmit nodes restore their data frame transmission capabilities of ports on a link ever affected by a failure. A system and an apparatus for avoiding data loop in an Ethernet ring are also disclosed.

## Description

### FIELD OF THE INVENTION

The present invention relates to the field of communication, and more particularly, to a method, apparatus and system for avoiding data loop in an Ethernet ring.

### BACKGROUND

It is a unique feature for the Ethernet to support multi-point connections which can effectively support a great number of communication services within a large area. Moreover, an Ethernet ring topology with protection switching mechanism can be used to promote the communication reliability of multi-point connections.

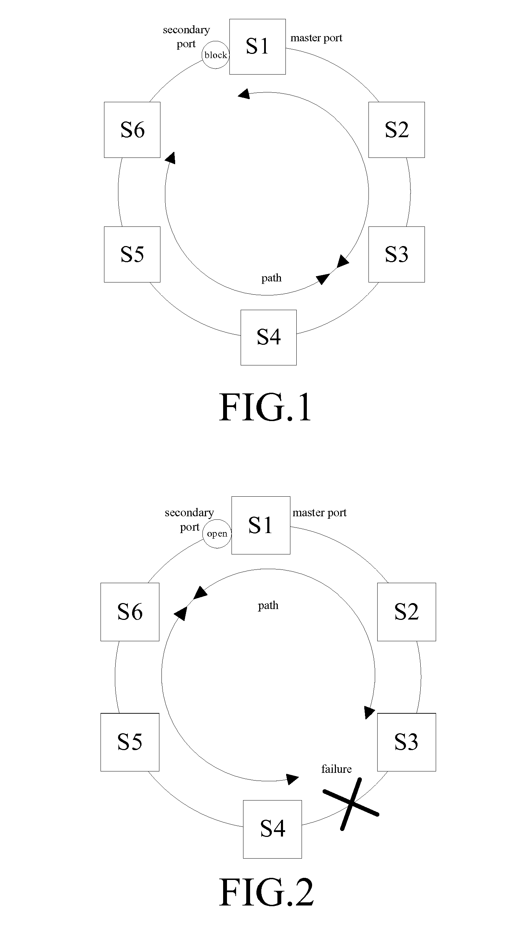

Refer to Fig. 1 which is structural diagram of an Ethernet ring. In Fig. 1, as the only master node in the ring, S1 blocks data frame from traversing its secondary port when the ring performs normal communication, for preventing broadcast storms due to the generation of loop. Generally, other nodes in the ring besides the master node S 1 are referred to as transmit nodes.

When a failure occurs in the ring, S1 triggers a corresponding protection switching operation. The specific principle of the protection switching is shown in Fig. 2. In Fig. 2, when the occurrence of failure is detected in the ring, S1 shifts to a ring failure state and opens its own secondary port for the data frame to allow the data frame to pass through. Moreover, S1 and other nodes in the ring flush their own forwarding tables, respectively, to resume topology learning. Meanwhile, S1 continually sends out, by its master port, polling frame in the ring. S1 may receive via its secondary port the polling frame sent by itself once the ring failure has been removed. In this case, S 1 restores a normal state from the ring failure state, and blocks the data frame from traversing its secondary port again.

The ring failure generally includes link failure and/or node failure. There are several ways for S 1 to detect the occurrence of ring failure. For example, S 1 determines that a ring failure has been detected, when receiving an alarm frame from the transmit node.

Obviously, a certain time interval is needed between the remove of a ring failure and the reception of the polling frame by S 1 via its secondary port. The secondary port of S1remains opening during that time interval, which causes the occurrence of data loop in the ring for a short while.

Moreover, because a polling frame is generally transmitted unidirectionally, no ring failure occurs in the other unidirectional link when a unidirectional link failure occurs in the ring of a bidirectional communication. This causes the occurrence of loop on the unidirectional link without a ring failure.

### SUMMARY

In view of the above problem, a method for avoiding data loop in an Ethernet ring provided in an embodiment of the present disclosure can effectively decrease the occurrence probability of data loop phenomenon.

The method includes: preventing, by transmit nodes constituting a ring, themselves from using the data frame transmission capabilities of ports on a link affected by a failure, when the ring failure is detected by the transmit nodes constituting the ring; learning, by a master node of the ring, the ring failure, and performing a protection switching operation; and flushing, by the transmit nodes, their own forwarding tables, and forwarding frames according to the flushed forwarding tables.

An Ethernet ring system provided in an embodiment of the present invention includes one master node and a plurality of transmit nodes, with the master node and the transmit nodes being connected to form a ring. The transmit nodes are able to detect whether a failure is occurred in the ring, and the transmit nodes are adapted to prevent themselves from using the data frame transmission capability of a port on a link affected by the failure if a failure is detected; notify the occurrence of the failure to the master node; and flush their own forwarding tables after receiving a flushing notifying control frame from the master node. The master node is capable of performing a protection switching operation and sending the flushing notifying control frame to the transmit nodes in the ring after learning the occurrence of the failure.

A master node in an Ethernet ring provided in an embodiment of the present invention includes a state learning module, a protection switching module and a flushing control module.

The state learning module is adapted to learn whether a failure is occurred in a ring, and to inform the protection switching module and the flushing control module respectively when a failure is learned.

The protection switching module is adapted to perform the protection switching operation according to the notification from the state learning module

The flushing control module is adapted to generate and send flushing notifying control frame.

A transmit node in an Ethernet ring provided in an embodiment of the present invention includes a failure detection module, a port control module and a forwarding table management module.

The failure detection module is adapted to detect whether a failure is occurred in a ring, and to inform the port control module if so.

The port control module is adapted to prevent the transmit nodes from using the data frame transmission capabilities of ports on a link affected by the failure after receiving the notification from the failure detection module.

The forwarding table management module is adapted to flush the forwarding tables of the transmit nodes according to the flushing notifying control frame.

Compared with the conventional art, a solution for avoiding data loop in an Ethernet ring provided in the embodiments of the present invention possesses the advantages of: transmit nodes in the Ethernet ring preventing themselves from using data frame transmission capabilities of ports on a link affected by a failure when a ring failure is detected; moreover, the transmit node further deciding whether a flushing notify control frame sent by a master node after the master node shifted to the normal state is received, and if the result of the determining is received, restore their data frame transmission capabilities of the port on the link ever affected by the failure; therefore effectively decreasing the occurrence probability of a data loop, and even completely avoiding the occurrence of the data loop.

### BRIEF DESCRIPTION OF THE DRAWING(S)

Figure 1 is a structural diagram of an Ethernet ring of the conventional art;

Figure 2 is a principle diagram of an Ethernet ring protection switching mechanism of the conventional art;

Figure 3 is a flow chart of a protection switching mechanism of a first preferred embodiment of the present invention;

Figure 4 is a flow chart of a protection switching mechanism of a second preferred embodiment of the present invention.

### DETAILED DESCRIPTION

The invention is described in detail in conjunction with the accompanying drawings and the specific embodiments.

In the method for avoiding data loop in an Ethernet ring provided in an embodiment of the present invention, when a ring failure is detected, transmit nodes in the Ethernet ring prevent themselves from using the data frame transmission capabilities of ports on a link affected by the failure; moreover, the transmit nodes may further decide whether a flushing notifying control frame sent by a master node after the master node has shifted to the normal state is received, and if the result of the decision is yes, restore their data frame transmission capabilities of the port on the link ever affected by the failure.

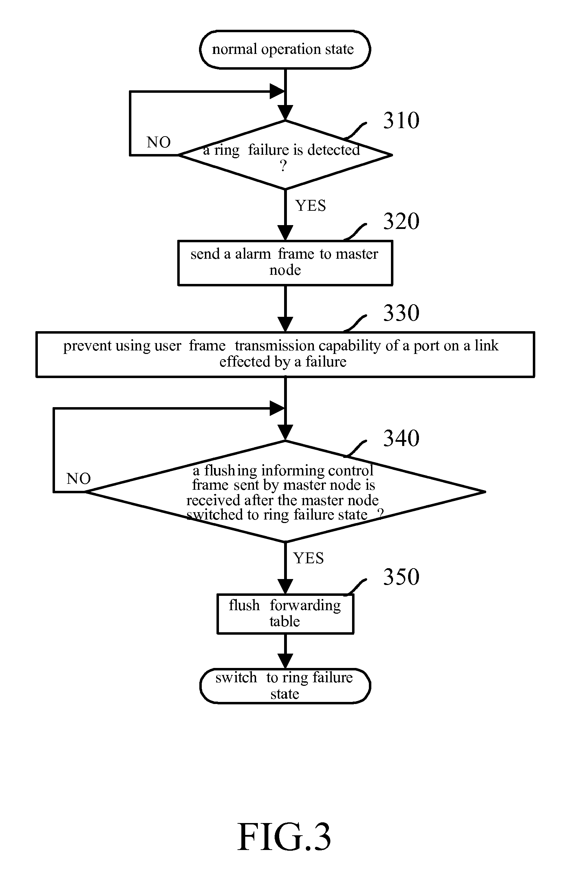

Refer to Fig. 3, which is a flow chart of a protection switching of a first preferred embodiment of the present invention, including the following steps:

In step 310, while in a normal operation state, the transmit nodes use prior art to detect a ring failure in the ring. If a ring failure is detected, the process proceeds with step 320; if no ring failure is detected, the process returns to step 310.

In step 320, the transmit node sends an alarm frame to a master node when a ring failure is detected.

When the master node receives the alarm frame from the transmit node, the master node determines that a ring failure has been detected.

In practice, the master node may continually send, from its master port, a polling frame in the ring. When the ring operates normally, the master node is capable of receiving, by its own secondary port, the polling frame sent by their master port. When a failure occurs on the link, the master node could not receive the polling frame before a set failure period timer is expired, thus the master node determines that a ring failure has been detected.

In step 330, after the transmit nodes send the alarm frame, the transmit nodes prevents themselves from using the data frame transmission capability of their own ports on the link affected by the failure, to ensure that no data frame is passing through the port on the link affected by the failure. Taking Fig. 2 as an example, S3 and S4 are only required to prevent themselves from using their data frame transmission capabilities of ports on a link affected by the failure, without preventing themselves from using their data frame transmission capabilities of ports on a link not affected by the failure.

In detail, there are many ways for the transmit nodes to prevent a port of the transmit nodes from using the data frame transmission capability, such as, the transmit nodes blocking data frame from traversing their ports on the link affected by the failure; or the transmit nodes setting their ports on the link affected by the failure to be unavailable for data frame.

It is should be understood that step 320 and step 330 generally operate concurrently; or the time interval between the operations of step 320 and step 330 is extremely short. Therefore, the master node always receives the alarm frame when or after the transmit nodes prevent themselves from using data frame transmission capability.

Obviously, the operation for the master node to open its secondary port due to the reception of an alarm frame is performed after the transmit nodes have prevented themselves from using data frame transmission capability so that no data loop occurs in the ring when the nodes in the ring switch from a normal state to a ring failure state because of the ring failure.

It is should be understood that the operation of step 330 also may be performed before the operation of step 320 in practice.

In step 340, when the master node receives an alarm frame from the transmit node, the master node performs a corresponding protection switching operation and finally shifts to the ring failure state. Moreover, the master node sends a flushing notifying control frame to the transmit nodes in the ring, to notify the transmit nodes to flush forwarding tables. Therefore, the transmit nodes, which have prevented themselves from using data frame transmission capability of the port on the link affected by a failure, may determine whether the flushing notifying control frame has been received, and if yes, the process proceeds with step 350; otherwise returns to step 340.

In step 350, the transmit nodes use prior art to flush the forwarding tables saved by themselves, when the transmit nodes receive the flushing notifying control frame sent by the master node after the master node shifted to the ring failure state.

Thereafter, the transmit nodes shift to the ring failure state.

Referring to Fig. 3, no data loop occurs in the ring when the nodes in the ring have switched to the ring failure state from the normal state due to a ring failure.

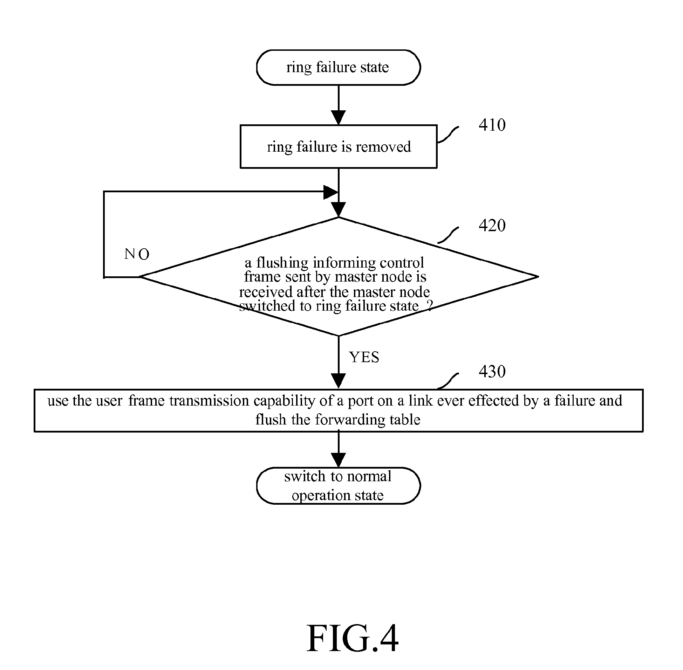

In the subsequent communication process, if the ring failure in the ring has been removed, the nodes in the ring will perform the operations shown in Fig. 4. Referring to Fig. 4, it is a flow chart of a protection switching of a second preferred embodiment of the present invention, including the following steps:

In step 410, it is learned by the transmit nodes which have prevented themselves from using data frame transmission capabilities of ports on a link affected by a failure that the ring failure has been removed.

Thereafter, the transmit nodes may send a control frame to the master node, to notify the master node that the ring failure has been removed. The master node may also determine that the ring failure has been removed when it receives a polling frame sent by itself. When the master node learns that the ring failure has been removed, it shifts to the normal state and sends a flushing notifying control frame to the transmit nodes in the ring to notify the transmit nodes to flush the forwarding tables. Moreover, the master node blocks data frame from traversing its secondary port again to prevent the data frame from passing through.

In step 420, it is determined by the transmit nodes which have prevented themselves from using data frame transmission capabilities of ports on a link affected by a failure, whether the flushing notifying control frame sent by the master node after the master node shifted to the normal state is received, and the process proceeds with step 430 if so; otherwise returns to step 420.

In step 430, the transmit nodes restore their data frame transmission capabilities of the port on the link ever affected by the failure, and flush the forwarding tables saved by themselves according to the flushing notifying control frame from the master node.

Particularly, there are many ways for the transmit nodes to restore the data frame transmission capability, such as, the transmit nodes opening their ports on the link ever affected by the failure for data frame; or the transmit nodes setting their ports on the link ever affected by the failure to be available for data frame.

Thereafter, the transmit nodes shift to the normal state.

As can be seen from Fig. 4, after the master node has blocked the data frame from traversing its own secondary ports again due to the shift to the normal state, the transmit nodes restore their data frame transmission capabilities of the port on the link ever affected by the failure so that no data loop occurs in the ring when the nodes in the ring switched to the normal state from the ring failure state due to the remove of a ring failure.

The master node adapted to implement foregoing preferred embodiment processing flows includes a state learning module, a protection switching module, and a flushing control module.

The state learning module is adapted to learn whether a failure occurs in a ring, so as to inform the protection switching module and flushing control module respectively when learning that a failure has occurred; and for learning whether the ring failure is removed, so as to inform the protection switching module and flushing control module respectively if the ring failure has been removed.

The state learning module may include a polling unit including a pre-set failure period timer. The polling unit is adapted to sending polling frames continually, and to determine whether a polling frame is received from a secondary port of the master node before a failure period timer expires, and if received, no failure occurred in the ring; and if not, a failure occurred in the ring.

The protection switching module is adapted to perform a protection switching operation according to a notification from the state learning module. The protection switching operation is to unblock the secondary port of the master node for allowing data frames to be sent and received by the secondary port. The protection switching module is further adapted to enable the master node to restore a normal state from the protection switching state according to the notification from the state learning module, that is to say, blocking the secondary port of the master node and stopping sending and receiving data frames by the secondary port.

The flushing control module is adapted to generating and sending the flushing notifying control frame to the transmit nodes in the ring.

The transmit node adapted to implementing foregoing preferred embodiment process flow includes a failure detection module, a port control module and a forwarding table management module.

The failure detection module is adapted to detect whether a failure occurs in the ring, and to inform the port control module if so. The failure detection module further includes a notifying unit adapted to generate and send an alarm frame to the master node in the ring when a ring failure is detected by the failure detection module. The failure detection module further detect whether the failure in the ring has disappeared, and inform the unit if so, to generate and send to the master node in the ring a control frame notifying that the failure has disappeared.

The port control module is adapted to prevent the transmit nodes from using data frame transmission capabilities of ports on a link affected by a failure after receiving the notification from the failure detection module; restore the data frame transmission capability of the ports on the link ever affected by the failure of the transmit nodes according to the received flushing notifying control frame sent by the master node after the master node shifted to a normal state.

The forwarding table management module is adapted to flush the forwarding table of the transmit nodes according to the received flushing notifying control frame.

It can be seen the foregoing description that the method, system and the apparatus for avoiding the data loop in the Ethernet ring provided by embodiments of the present invention may effectively decrease the occurrence probability of a data loop, and even may completely avoid the occurrence of the data loop.

## Claims

1. A method for avoiding data loop in an Ethernet ring, **characterized in** comprising:
preventing, by transmit nodes that constitute a ring, themselves from using their data frame transmission capabilities of ports on a link affected by a ring failure after the failure has been detected by the transmit nodes;
learning, by a master node of the ring, the ring failure and performing a protection switching operation; and
flushing, by the transmit nodes, their own forwarding tables and forwarding frames according to flushed forwarding tables.

2. The method of claim 1, **characterized in that** the ring failure is a link failure and/or a node failure.

3. The method of claim 1, **characterized in that** the preventing, by the transmit nodes, from using the data frame transmission capability comprises:
blocking, by the transmit nodes, the data frame from traversing their ports on the link affected by the failure; or
setting, by the transmit nodes, their ports on the link affected by the failure to be unavailable for the data frame.

4. The method of claim 1, **characterized in that** the learning, by the master node of the ring, the ring failure is:
the master node has received an alarm frame from the transmit nodes; or
the master node has not received a polling frame before a set failure period timer expired.

5. The method of claim 1, **characterized in that** the performing, by the master node, the protection switching operation comprises: unblocking, by the master node, its own secondary port.

6. The method of claim 5, **characterized in that** besides unblocking, by the master node, its own secondary port, the protection switching operation performed by the master node further comprises: sending a polling frame by the master node.

7. The method of claim 1, **characterized in that** the flushing, by the transmit nodes, their own forwarding tables further comprises:
sending, by the master node, a flushing notifying control frame to transmit nodes in a ring;
receiving, by the transmit nodes, the flushing notifying control frame, and flushing their own forwarding tables according to the flushing notifying control frame.

8. The method of any one of claims 1 to 7, **characterized in** further comprising:
learning, by the master node, that the ring failure has been removed, shifting to a normal state, and sending the flushing notifying control frame to the transmit nodes in the ring; and
restoring, by the transmit nodes, their data frame transmission capabilities of the ports on the link ever affected by the failure when receiving the flushing notifying control frame, and flushing their own forwarding tables.

9. The method of claim 8, **characterized in that** the learning, by the master node, that the ring failure has been removed comprises:
receiving, by the master node, the control frame from the transmit nodes so as to learn that the ring failure has been removed; or
receiving, by the master node, a polling frame sent by itself so as to determine that the ring failure has been removed.

10. The method of claim 8, **characterized in that** the shifting to a normal state comprises: blocking, by master node its own secondary port.

11. The method of claim 8, **characterized in that** the restoring, by the transmit nodes, the data frame transmission capability comprises:
unblocking, by the transmit nodes, their ports on the link ever affected by the failure for data frame; or
setting, by the transmit nodes, their ports on the link ever affected by the failure to be available for data frame.

12. An Ethernet ring system **characterized in** comprising: a master node and a plurality of transmit nodes, the master node and the transmit nodes being connected to form a ring, wherein
the transmit nodes are adapted to detect whether a failure occurs in the ring, and preventing, by the transmit nodes, themselves from using data frame transmission capabilities of ports on a link affected by the failure when the failure is detected and flush their own forwarding tables after receiving a flushing notifying control frame from the master node; and
the master node is adapted to perform a protection switching operation when it learned that a failure occurred in the ring, and send the flushing notifying control frame to the transmit nodes in the ring.

13. The system of claim 12, **characterized in that**
the master node is further adapted to shift to a normal state when it learned that the ring failure has been removed, and send the flushing notifying control frame to the transmit nodes in the ring; and
the transmit nodes are further adapted to restore their data frame transmission capabilities of the ports on the link ever affected by the failure after receiving the flushing notifying control frame sent by master node after master node has shifted to the normal state, and flush their own forwarding tables.

14. A master node, **characterized in** comprising: a state learning module, a protection switching module and a flushing control module, wherein
the state learning module is adapted to learn whether a failure occurs in a ring, and to inform the protection switching module and flushing control module respectively if a failure occurrence is required
the protection switching module is adapted to perform a protection switching operation according to a notification from state learning module; and
the flushing control module is adapted to generate and send flushing notifying control frame.

15. The master node of claim 14, **characterized in that** the state learning module is further adapted to learn whether the failure in the ring has been removed, inform the protection switching module and flush control module respectively if it has been removed;
the protection switching module is further adapted to make the master node restore a normal state from a protection switching state according to the notification from the state learning module.

16. The master node of claim 14 or 15, **characterized in that**, the state learning module comprises a polling unit which comprises a preset failure period timer, the polling unit is adapted to send polling frames continually and determine whether the polling frame has been received from secondary port of the master node before the failure period timer expired, and if received, no failure occurs in a ring; if not, a failure occurs in a ring.

17. A transmit node, **characterized in** comprising: a failure detection module, a port control module and a forwarding table management module, wherein
the failure detection module is adapted to detect whether a failure occurs in a ring, and to inform the port control module if so;
the port control module is adapted to prevent the transmit node from using data frame transmission capabilities of ports on a link affected by a failure after receiving a notification from the failure detection module; and
the forwarding table management module is adapted to flush a forwarding table of the transmit node according to received flushing notifying control frame.

18. The transmit node of claim 17, **characterized in that,** the port control module is further adapted to restore the data frame transmission capabilities of ports on a link ever affected by the failure of the transmit node according to received flushing notifying control frame.

19. The transmit node of claim 17 or 18, **characterized in that**, the failure detection module further comprises a notifying unit adapted to generate and send an alarm frame when the failure detection module detects that the failure occurs in the ring.
